# EUROPÄISCHE PATENTSCHRIFT

(11) **EP 2 994 361 B1**
(45) Veröffentlichungstag und Bekanntmachung des Hinweises auf die Patenterteilung: **12.04.2017**
(21) Anmeldenummer: 14735456.7
(22) Anmeldetag: 08.05.2014
(51) Int. Cl.: B62B 3/18, B62B 3/14

(54) **FAHRBARES TRANSPORTGERÄT**
MOBILE TRANSPORT DEVICE
DISPOSITIF DE TRANSPORT ROULANT

(30) Priorität: 11.05.2013 DE 202013004429 U
(43) Veröffentlichungstag der Anmeldung: 16.03.2016
(73) Patentinhaber: Eberlein, Martin, 89358 Kammeltal (DE)
(72) Erfinder: Eberlein, Martin, 89358 Kammeltal (DE)
(86) Internationale Anmeldenummer: PCT/DE2014/000237
(87) Internationale Veröffentlichungsnummer: WO 2014/183737

(56) Entgegenhaltungen:
- DE-U1- 8 214 932
- DE-U1- 8 714 522
- DE-U1-202006 019 867

## Beschreibung

Die Erfindung betrifft ein fahrbares Transportgerät, das mit gleichen Transportgeräten platzsparend stapelbar ist und ein mit Längsträgern ausgestattetes Fahrgestell aufweist, das wenigstens eine zum Abstellen von Gegenständen bestimmte Abstelleinrichtung trägt, wobei jede Abstelleinrichtung um je eine horizontale Achse bewegbar am Fahrgestell gelagert ist und auf wenigstens einer am Fahrgestell befindlichen Stütze aufliegt, wobei neben jeder Stütze wenigstens ein Freiraum gebildet ist und wobei am vorderen Ende der Abstelleinrichtung wenigstens ein Abstützelement vorgesehen und im hinteren Bereich des Transportgerätes wenigstens eine geneigte Prallfläche angeordnet ist, die schräg nach hinten abfällt und zum Auffahren für das wenigstens eine Abstützelement eines weiteren gleichen Transportgerätes bestimmt ist, das in ein vorausbefindliches Transportgerät eingeschoben werden kann.

Ein Transportgerät dieser Art kennt man durch einen Transportwagen, der im Dokument DE 82 14 932 U1 beschrieben ist. Um derartige, mit einer Abstelleinrichtung ausgestattete Transportgeräte platzsparend ineinanderschieben, also stapeln zu können, weisen deren Fahrgestelle, von oben betrachtet, einen trapezförmigen Grundriss auf, dessen längere parallele Fahrrahmenseite fehlt. Die als Ladeplattform gestaltete Abstelleinrichtung weist vorne wenigstens ein Abstützelement auf. Am hintern Ende des Transportgerätes ist eine schräg nach hinten abfallende Prallfläche vorgesehen, um den Stapelvorgang zu erleichtern. Aus dem Dokument ist nicht entnehmbar, wie sich die Abstelleinrichtung vorne auf dem Fahrgestell abstützt. Bei bekannten Transportwagen, die weder Abstützelemente noch Prallflächen aufweisen, befinden sich Abstützelemente an der Unterseite der Abstelleinrichtung, die relativ hoch ausgebildet sind und die Abstelleinrichtung auf dem Fahrgestell abstützen. Hohe Abstützelemente bewirken zwischen zwei gestapelten Transportgeräten einen großen Stapelabstand, der aus Platzgründen nicht wünschenswert ist.

Im Dokument DE 20 2011 003 780 U1 wird ein Transportgerät in der bevorzugten Form eines Einkaufswagens beschrieben. Auch dieses Transportgerät weist ein trapezförmiges Fahrgestell auf, doch ist dieses Fahrgestell so gestaltet, dass Transportgeräte, die mit solchen Fahrgestellen ausgestattet sind, viel enger als bisher möglich gestapelt werden können. Allerdings weist dieses Transportgerät weder ein Abstützelement noch eine Prallfläche der eingangs beschriebenen Art auf.

Ähnliches gilt auch für einen Transportcontainer gemäß dem Dokument EP 1 775 193 A3. Auch bei diesem Transportcontainer sind pro Abstelleinrichtung weder Prallflächen noch Abstützelemente vorgesehen.

Ausgehend vom eben genannten Stand der Technik besteht die Aufgabe der Erfindung darin, ein Transportgerät der eingangs genannten Art so weiter zu entwickeln, dass dieses mit einem weiteren gleichen Transportgerät äußerst eng gestapelt werden kann. Anzustreben sind Stapelabstände, wie diese bei Transportgeräten entsprechend der DE 20 2011 003 780 U1 möglich sind.

Die Lösung der Aufgabe besteht darin, dass neben jeder Stütze wenigstens ein Freiraum gebildet ist und dass in der horizontalen Ansicht des Transportgerätes und entlang seiner Längsrichtung betrachtet jede Prallfläche bildhaft in einen Freiraum eingetaucht ist und dass beim Stapelvorgang zweier Transportgeräte jede Prallfläche des einen Transportgerätes den ihr zugeordneten Freiraum des anderen Transportgerätes nutzt oder beansprucht.

Der entscheidende Vorteil der Erfindung zeigt sich, wenn man beispielsweise ein mit zwei Stützen ausgestattetes Transportgerät in ein gleiches vorausbefindliches Transportgerät einschiebt, um beide Transportgeräte, platzsparend gestapelt, abstellen zu können. Beim Ineinanderschiebevorgang führen die beiden Stützen des einzuschiebenden Transportgerätes rechts und links an der Prallfläche des vorausbefindlichen Transportgerätes vorbei. Die lichte Distanz zwischen den Stützen ist größer als die Breite der Prallfläche, so dass sich beim Ineinanderschiebevorgang der Transportgeräte deren Prallflächen und Stützen nicht behindern. Dabei nutzt die Prallfläche des vorausbefindlichen Transportgerätes den Freiraum des einzuschiebenden Transportgerätes und erlaubt es somit, dass gleiche Transportgeräte noch enger als bisher möglich und ohne jegliche gegenseitige Behinderung platzsparend gestapelt werden können. Die gleichen Vorteile stellen sich auch ein, wenn, wie nachfolgend beschrieben, die wenigstens eine Stütze sowie die Prallflächen und die Abstützelemente unter Beachtung des vorgeschlagenen Erfindungsgedankens anders als eben geschildert, angeordnet sind.

Die Erfindung wird anhand von Ausführungsbeispielen näher erläutert. Es zeigt
- Fig. 1: in Seitenansicht ein Transportgerät in Form eines Transportwagens, dessen Abstelleinrichtung als Ladeplattform ausgebildet ist;
- Fig. 2: das gleiche Transportgerät in einer in Längsrichtung des Transportwagens ausgerichteten Ansicht;
- Fig. 3: in Seitenansicht ein Transportgerät mit drei plattformartigen Abstelleinrichtungen sowie andeutungsweise ein weiteres gleiches Transportgerät;
- Fig. 4: ein Querstück mit zwei Stützen und einem nach unten sich erstrekkenden Freiraum sowie
- Fig. 5: ein Querstück mit einer Stütze und mit zwei nach unten sich erstrekkenden Freiräumen.

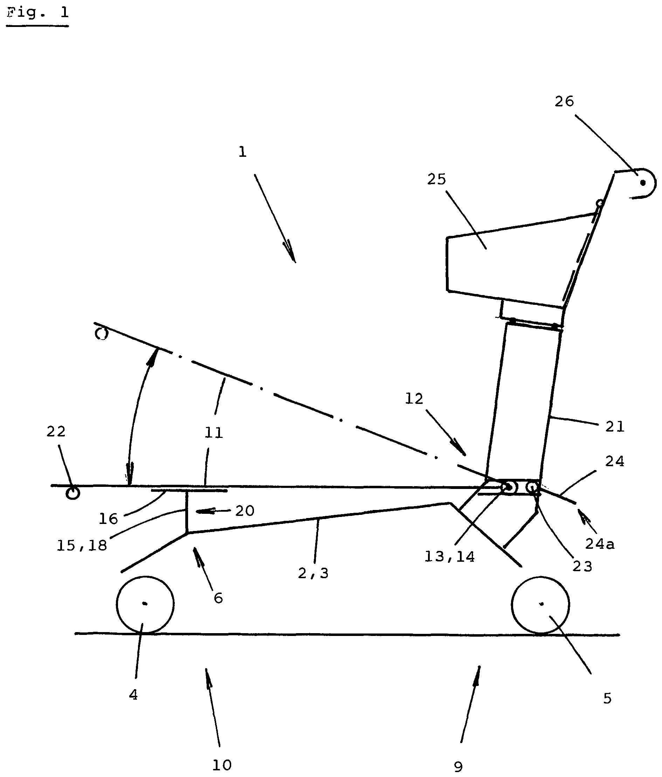

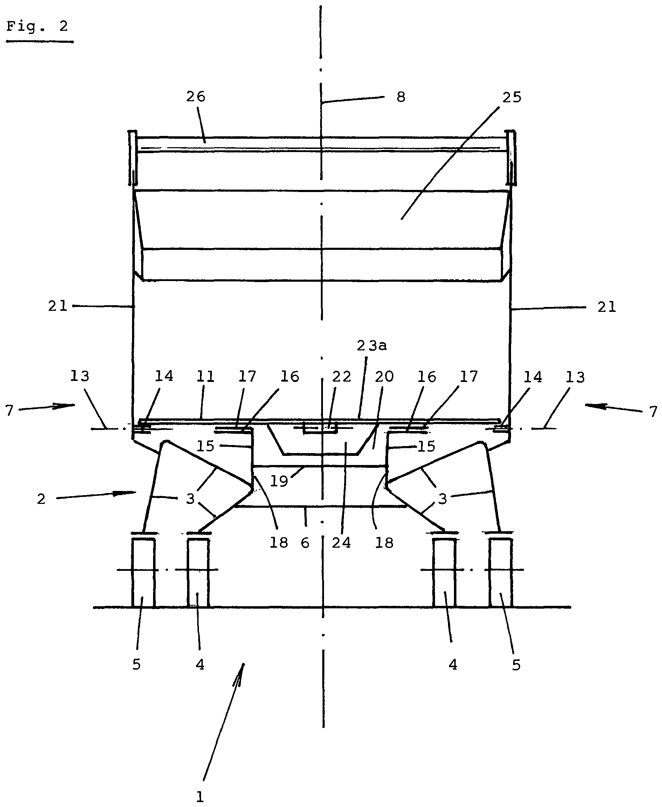

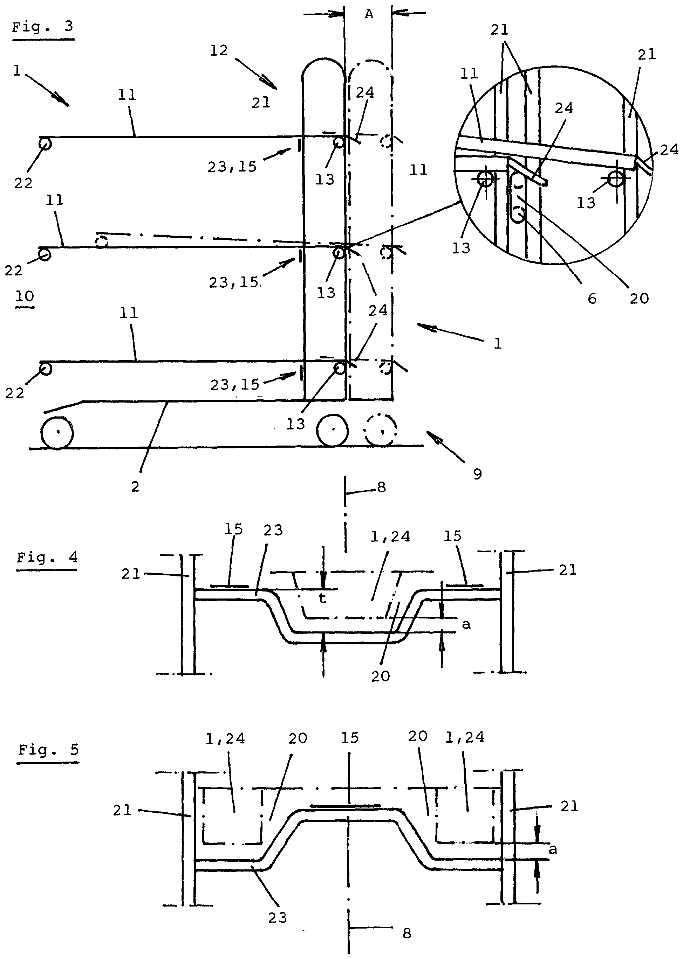

Das zusammen in Fig. 1 und in Fig. 2 in schematischer Darstellung gezeigte gleiche Transportgerät 1 weist ein Fahrgestell 2 auf. Das Fahrgestell 2 besitzt beispielsweise zwei Längsträger 3, wie diese in der DE 20 2011 003 780 U1 beschrieben sind. An den freien Enden der Längsträger 3 sind vordere und hintere Fahrrollen 4, 5 angeordnet. Die Spurweite der vorderen Fahrrollen 4 ist kleiner als die Spurweite der hinteren Fahrrollen 5. Nahe der vorderen Fahrrollen 4 sind die Längsträger 3 durch einen Quersteg 6 verbunden. Im hinteren Bereich 9 des somit fahrbaren Transportgerätes 1 führt von jedem Längsträger 3 ausgehend je ein Holm 21 nach oben. Das Fahrgestell 2 trägt eine Abstelleinrichtung 11 in Gestalt einer bekannten Ladeplattform. Die Abstelleinrichtung 11 ist im hinteren Bereich 9 um eine horizontale Achse 13 bewegbar am Fahrgestell 2 gelagert. Im Beispiel befinden sich die dafür bestimmten Lager 14 an den Holmen 21. Im vorderen Bereich 10 liegt die Abstelleinrichtung 11 auf zwei Stützen 15 auf, die am Fahrgestell 2 befestigt und nach oben gerichtet sind. Jede Stütze 15 weist einen horizontalen Auflageabschnitt 16 auf. Die Auflageabschnitte 16 sind gegenläufig zueinander angeordnet und weisen nach außen zu den beiden Längsseiten 7 des Transportgerätes 1. Auf den Auflageabschnitten 16 können sich stoßdämpfende Teilstücke 17 befinden, auf welchen die Abstelleinrichtung 11 aufliegt. Die strichpunktiert gezeichnete Darstellung verdeutlicht die Bewegbarkeit der Abstelleinrichtung 11. Diese Bewegbarkeit ist in bekannter Weise erforderlich, um gleiche Transportgeräte 1 stapeln zu können. Die Stützen 15 sind im Beispiel mit ihren unteren Enden an je einem Längsträger 3 befestigt. Sie können aber auch am Quersteg 6 vorgesehen sein. Die auf Abstand gehaltenen senkrechten Abschnitte 18 der Stützen 15 können durch ein Querstück 19 verbunden sein. Zwischen den Abschnitten 18 ist, wie aus der Zeichnung ersichtlich, ein Freiraum 20 gebildet, der im Ausführungsbeispiel in vertikaler Richtung folgend an einer Querstrebe 23a beginnt und unten am Querstück 19 endet. Neben jeder Stütze 15 ist somit wenigstens ein Freiraum 20 gebildet. Die Stützen 15 sind symmetrisch zur vertikalen Mittelachse 8 des Transportgerätes 1 angeordnet, was auch für die nachfolgenden Ausführungsbeispiele gilt. Auf der Mittelachse 8 liegend ist am vorderen Ende der Abstelleinrichtung 11 wenigstens ein Abstützelement 22 in Form einer um eine horizontale Achse drehbaren Rolle oder in Gestalt von wenigstens einem ortsfest angeordneten Gleitstück vorgesehen. Dieses wenigstens eine Abstützelement 22 dient in bekannter Weise dazu, auf eine Prallfläche 24 eines vorausbefindlichen Transportgerätes 1 dann aufzufahren, wenn es gilt, zwei Transportgeräte 1 platzsparend ineinander zu schieben. Die Prallfläche 24 befindet sich hinter dem hinteren Ende 12 der Abstelleinrichtung 11. Die Prallfläche 24 weist schräg nach hinten abfallend nach unten. Die Prallfläche 24, es können auch zwei sein, ist im Beispiel an der horizontalen Querstrebe 23a befestigt, die in einem Abstand zur horizontalen Achse 13 angeordnet, entweder die beiden Längsträger 3 oder die beiden Holme 21 verbindet. Im Beispiel tragen die beiden Holme 21 einen für weitere Ware bestimmten konischen Korb 25, wie dies bei stapelbaren Einkaufswagen üblich ist. Am Korb 25 sind Mittel 26 wie Griffe vorgesehen, die ein Bewegen des Transportgerätes 1 von Hand ermöglichen. Das Transportgerät 1 kann auch ohne Korb 25 ausgestattet sein. Dann führen die beiden Holme 21 weiter nach oben und tragen an ihren Enden die zum Bewegen des Transportgerätes 1 vorgesehenen Mittel 26. Bei entsprechender Gestaltung können die Mittel 26 auch durch die Holme 21 selbst gebildet sein. Aus der in Längsrichtung des Transportwagens 1 gewählten Ansicht (Vorderansicht) gemäß Fig. 2 geht hervor, dass sich die wenigstens eine Prallfläche 24 bildlich zwischen den beiden Stützen 15, also neben jeder Stütze 15 und damit im Freiraum 20 befindet. Jede Prallfläche 24 ist somit bildhaft in einen Freiraum 20 eingetaucht. Der lichte Abstand der beiden Stützen 15, und somit auch die Breite des Freiraumes 20, ist dabei größer als die horizontal gemessene Breite der wenigstens einen Prallfläche 24. Ebenso ist der Freiraum 20 so tief gestaltet, siehe auch Fig. 4, dass es beim Ineinanderschiebevorgang zweier Transportgeräte 1 nicht zu einer Kollision der Prallfläche 24 des vorausbefindlichen Transportgerätes 1 mit Teilen des einzuschiebenden Transportgerätes 1 kommt, die an dessen Freiraum 20 angrenzen. Der oder jeder nach unten gerichtete Freiraum 20 endet demnach in vertikaler Richtung folgend tiefer als die untere Begrenzung 24a der wenigstens einen Prallfläche 24, siehe auch Fig. 1 sowie Fig. 4, Maß a. Beim Ineinanderschieben der Transportgeräte 1 stoßen somit auch die beiden Stützen 15 eines einzuschiebenden Transportgerätes 1 nicht an die wenigstens eine Prallfläche 24 des vorausbefindlichen Transportgerätes 1 an. Die Prallfläche 24 des vorausbefindlichen Transportgerätes 1 nutzt beim Ineinanderschiebevorgang den Freiraum 20 des einzuschiebenden Transportgerätes 1. Gleiches gilt analog auch beim nachfolgenden Ausführungsbeispiel. Durch diese erfinderischen Maßnahmen ist es möglich, gleiche Transportgeräte 1 äußerst eng zu stapeln und dies sogar dann, wenn wie dargestellt, die Abstelleinrichtung 11 in Gebrauchslage exakt horizontal angeordnet ist. In gestapeltem Zustand sind die Abstelleinrichtungen 11 der in einer Reihe abgestellten Transportgeräte 1 in bekannter Weise angehoben.

Fig. 3 zeigt in einer Seitenansicht ein fahrbares Transportgerät 1, das ebenfalls von Hand bewegbar ist und im Gegensatz zu Fig. 1 und 2 mit mehr als einer Abstelleinrichtung 11 ausgestattet ist. Im Beispiel sind es drei Abstelleinrichtungen 11, die übereinander angeordnet sind. Ausgehend vom mit Fahrrollen 3 und 4 ausgestatteten Fahrgestell 2 erstrecken sich im hinteren Bereich 9 und ausgehend von den beiden Längsseiten 7 des Transportgerätes 1 paarweise zwei Holme 21 senkrecht nach oben. An den Holmen 21 sind Mittel wie bekannte Griffabschnitte zum Schieben oder Bewegen des Transportgerätes 1 vorgesehen. Jede Abstelleinrichtung 11 ist im Ausführungsbeispiel um jeweils eine horizontale Achse 13 am hinteren der beiden Holme 21 schwenkbar gelagert. Jede Abstelleinrichtung 11 ist auf zwei Stützen 15 abgestützt, die sich jeweils an einem Querverbindungsstück 23 befinden, wobei jedes Querverbindungsstück 23 die vorderen der beiden paarweise angeordneten Holme 21 verbindet. Am hinteren Ende 12 einer jeden Abstelleinrichtung 11 ist jeweils wenigstens eine schräg nach hinten abfallende Prallfläche 24 vorgesehen. Jede Abstelleinrichtung 11 weist an ihrem vorderen Ende wieder mindestens ein Abstützelement 22 auf, wobei jedes Abstellelement 22, wie bereits in Fig. 1 und Fig. 2 beschrieben, zum Auffahren an eine Prallfläche 24 eines vorausbefindlichen Transportgerätes 1 dann bestimmt ist, wenn es gilt, zwei Transportgeräte 1 platzsparend ineinander zu schieben.
Es ist strichpunktiert ein weiteres gleiches Transportgerät 1 dargestellt, das in das eben beschriebene Transportgerät platzsparend eingeschoben ist. Der dabei sich einstellende Mindestabstand der beiden Transportgeräte 1 ist mit A gekennzeichnet. Jedes Querverbindungsstück 23, mit seinen Stützen 15, hat aufgrund der gebildeten Freiräume 20, siehe Fig. 4 und 5, die nach hinten vorstehenden Prallflächen 24 des vorausbefindlichen Transportgerätes 1 unterfahren. Dadurch ist es möglich, äußerst geringe Stapelabstände mit dem Maß A zu erzielen. Im Gegensatz zu dem in Fig. 1 und 2 beschriebenen Ausführungsbeispiel, bei dem sich die Stützen 15 im vorderen Bereich 10 und die horizontale Achse 13 im hinteren Bereich 9 befinden, sind beim hier beschriebenen Ausführungsbeispiel sowohl die Stützen 15 als auch die horizontalen Achsen 13 nur im hinteren Bereich 9 angeordnet. Im Beispiel beanspruchen die Prallflächen 24 des vorausbefindlichen Transportgerätes 1 (in der Zeichnung links) die Freiräume 20 des eingeschobenen Transportwagens 1, siehe auch vergrößerte Darstellung.

Fig. 4 zeigt eines der drei Querverbindungsstücke 23, siehe Fig. 3, an denen sich die Stützen 15 befinden. Anhand der Zeichnung erkennt man die vorderen der beiden Holme 21, die durch ein Querverbindungsstück 23 verbunden sind. Die beiden Stützen 15 sind angedeutet. Mittig ist jedes Querverbindungsstück 23 nach unten gebogen, so dass durch die entstandene Tiefe t und durch die Dicke des Querverbindungsstückes 23 ein nach unten sich erstreckender Freiraum 20 gebildet ist. Der Freiraum 20 endet in vertikaler Richtung folgend tiefer als die untere Begrenzung 24a der Prallfläche 24, siehe Maß a sowie Fig. 5. Die beiden Stützen 15 sind durch den nach unten sich erstreckenden Freiraum 20 getrennt. Strichpunktiert ist eine Prallfläche 24 des Transportgerätes 1 dargestellt. Bezogen auf jedes Querverbindungsstück 23 ist somit neben den beiden Stützen 15 wenigstens ein nach unten sich erstreckender Freiraum 20 gebildet, wobei sich in der horizontalen Ansicht des Transportgerätes 1 entlang seiner Längsrichtung die Prallfläche 24 bildhaft zwischen den Stützen 15 und in den Freiraum 20 eintauchend sowie zumindest einen Teil des Freiraumes 20 beanspruchend, befindet. Das Transportgerät 1 kann auch mit zwei Prallflächen 24 ausgestattet sein, die dann ebenfalls bildhaft in den Freiraum 20 eintauchen.

Fig. 5 zeigt in einer Abwandlung zu den bisher gezeigten Lösungsansätzen ein Querverbindungsstück 23 mit nur einer Stütze 15, die sich zwischen oder neben zwei Freiräumen 20 befindet. Es sind somit zwei Prallflächen 24 und zwei Abstützelemente 22 vorgesehen, wobei in horizontaler Richtung des Transportgerätes 1 betrachtet jede Prallfläche 24 in einen Freiraum 20 eintaucht.

Die vorab beschriebenen fahrbaren Transportgeräte 1 sind bevorzugt als von Hand bewegbare Wagen beschrieben worden. Dessen ungeachtet werden von der Erfindung auch alle fahrbaren Transportgeräte 1 erfasst, die beispielsweise kraftbetrieben sind und entweder unterstützend für den Benutzer solcher Transportgeräte 1 wirken oder vom Benutzer gelenkt oder mit entsprechenden Steuerungsmitteln ausgestattet auch zum selbstständigen Fahren geeignet sind.
Auch bleibt zu erwähnen, dass die wenigstens eine Abstelleinrichtung 11 nicht unbedingt plattformartig gestaltet sein muß. Unter dem Begriff Abstelleinrichtung 11 sind vielmehr alle geeigneten und bekannten Einrichtungen erfasst, auf denen sich Gegenstände abstellen oder auch an Stäben oder Haken einhängen lassen. Auch können zwei Abstelleinrichtungen 11, beispielsweise als anhebbare Schienen ausgebildet, nebeneinander angeordnet sein.

## Patentansprüche

1. Fahrbares Transportgerät (1), das mit gleichen Transportgeräten (1) platzsparend stapelbar ist und ein mit Längsträgern (3) ausgestattetes Fahrgestell (2) aufweist, das wenigstens eine zum Abstellen von Gegenständen bestimmte Abstelleinrichtung (11) trägt, wobei jede Abstelleinrichtung (11) um je eine horizontale Achse (13) bewegbar am Fahrgestell (2) gelagert ist und auf wenigstens einer am Fahrgestell (3) befindlichen Stütze (15) aufliegt, wobei neben jeder Stütze (15) wenigstens ein Freiraum (20) gebildet ist und wobei am vorderen Ende der Abstelleinrichtung (11) wenigstens ein Abstützelement (22) vorgesehen und im hinteren Bereich (9) des Transportgerätes (1) wenigstens eine geneigte Prallfläche (24) angeordnet ist, die schräg nach hinten abfällt und zum Auffahren für das wenigstens eine Abstützelement (22) eines weiteren gleichen Transportgerätes (1) bestimmt ist, das in ein vorausbefindliches Transportgerät (1) eingeschoben werden kann, **dadurch gekennzeichnet, dass** in der horizontalen Ansicht des Transportgerätes (1) und entlang seiner Längsrichtung betrachtet jede Prallfläche (24) bildhaft in einen Freiraum (20) eingetaucht ist und dass beim Stapelvorgang zweier Transportgeräte (1) jede Prallfläche (24) des einen Transportgerätes (1) den ihr zugeordneten Freiraum (20) des anderen Transportgerätes (1) nutzt oder beansprucht.

2. Transportgerät nach Anspruch 1, **dadurch gekennzeichnet, dass** jeder Freiraum (20) in vertikaler Richtung folgend tiefer endet als die untere Begrenzung (24a) einer jeden Prallfläche (24) und dass die Breite eines jeden Freiraumes (20) größer ist als die Breite einer jeden Prallfläche (24).

3. Transportgerät nach Anspruch 1, **dadurch gekennzeichnet, dass** die Stützen (15) symmetrisch zur senkrechten Mittelachse (8) des Transportgerätes (1) angeordnet sind.

4. Transportgerät nach Anspruch 1, **dadurch gekennzeichnet, dass** der lichte Abstand der Stützen (15) größer ist als die horizontal gemessene Breite der wenigstens einen Prallfläche (24).

5. Transportgerät nach Anspruch 1, **dadurch gekennzeichnet, dass** die Stützen (15) entweder an den Längsträgern (3) oder an einem die Längsträger (3) verbindenden Quersteg (6) angeordnet sind.

6. Transportgerät nach Anspruch 1, **dadurch gekennzeichnet, dass** jede Stütze (15) einen Auflageabschnitt (16) aufweist, und jeder Auflageabschnitt (16) gegenläufig angeordnet und zu einer der beiden Längsseiten (7) des Transportgerätes (1) gerichtet ist.

7. Transportgerät nach Anspruch 6, **dadurch gekennzeichnet, dass** jeder Auflageabschnitt (16) mit einem elastischen und stoßdämpfenden Teilstück (17) ausgestattet ist und die Abstelleinrichtung (11) auf den Teilstücken (17) aufliegt.

8. Transportgerät nach Anspruch 1, **dadurch gekennzeichnet, dass** die wenigstens eine Prallfläche (24) an einer Querstrebe (23a) befestigt ist, die entweder die Längsträger (3) oder die Holme (21) verbindet.

9. Transportgerät nach Anspruch 1, **dadurch gekennzeichnet, dass** die wenigstens eine Prallfläche (24) am hinteren Ende (12) der wenigstens einen Abstelleinrichtung (11) angeordnet ist.

10. Transportgerät nach Anspruch 1, **dadurch gekennzeichnet, dass** jede Abstelleinrichtung (11) horizontal angeordnet ist.

## Claims

1. Mobile transportation apparatus (1) which is nestable in a space-saving manner with like transportation apparatuses (1) and has a chassis (2) with longitudinal beams (3), which carries at least one storage installation (11) for storing items, wherein each storage installation (11) is mounted on the chassis (2) so as to be movable in each case about a horizontal axis (13) and bears on at least one support (15) which is located on the chassis (3), wherein at least one free space (20) is formed beside each support (15), and wherein at the front end of the storage installation (11) at least one support element (22) is provided and in the rear region (9) of the transportation apparatus (1) at least one inclined impact face (24) which is downwardly inclined toward the rear and is specified for the at least one support element (22) of a further like transportation apparatus (1), which may be pushed into a transportation apparatus (1) located in front, to be run thereonto is disposed,
**characterized in that** in the horizontal view of the transportation apparatus (1) and when viewed along the longitudinal direction of the latter each impact face (24) is visualized so as to be plunged into a free space (20), and **in that** during nesting of two transportation apparatuses (1) each impact face (24) of the one transportation apparatus (1) utilizes or claims the free space (20) of the other transportation apparatus (1) assigned to said impact face of the one transportation apparatus.

2. Transportation apparatus according to Claim 1,
**characterized in that** each free space (20) in the vertical direction terminates lower down than the lower delimitation (24a) of each impact face (24), and **in that** the width of each free space (20) is larger than the width of each impact face (24).

3. Transportation apparatus according to Claim 1,
**characterized in that** the supports (15) are disposed so as to be symmetrical to the vertical central axis (8) of the transportation apparatus (1).

4. Transportation apparatus according to Claim 1,
**characterized in that** the clear spacing of the supports (15) is larger than the measured horizontal width of the at least one impact face (24).

5. Transportation apparatus according to Claim 1,
**characterized in that** the supports (15) are disposed either on the longitudinal beams (3) or on a transverse web (6) which connects the longitudinal beams (3).

6. Transportation apparatus according to Claim 1,
**characterized in that** each support (15) has a bearing portion (16), and each bearing portion (16) is disposed in the opposite direction and is oriented toward one of the two longitudinal sides (7) of the transportation apparatus (1).

7. Transportation apparatus according to Claim 6,
**characterized in that** each bearing portion (16) is equipped with an elastic and shock-absorbing section (17) and the storage installation (11) bears on the sections (17).

8. Transportation apparatus according to Claim 1,
**characterized in that** the at least one impact face (24) is fastened to a transverse stay (23a) which connects either the longitudinal beams (3) or the spars (21).

9. Transportation apparatus according to Claim 1,
**characterized in that** the at least one impact face (24) is disposed at the rear end (12) of the at least one storage installation (11).

10. Transportation apparatus according to Claim 1,
**characterized in that** each storage installation (11) is disposed so as to be horizontal.

## Revendications

1. Dispositif de transport (1) roulant pouvant être empilé avec des appareils de transport (1) identiques de façon à économiser de la place et comportant un châssis roulant (2) équipé de supports longitudinaux (3), supportant au moins un dispositif d'arrêt (11) défini pour arrêter des objets, chaque dispositif d'arrêt (11) étant disposé de façon à pouvoir se déplacer autour respectivement d'un axe horizontal (13) au niveau du châssis roulant (2) et reposant sur au moins un appui (15) se trouvant au niveau du châssis roulant (3), sachant qu'au moins un espace libre (20) est formé à côté de chaque appui (15) et qu'au moins un élément de maintien (22) est prévu au niveau de l'extrémité avant du dispositif d'arrêt (11) et qu'au moins une surface de choc (24) inclinée est disposée dans la région arrière (9) du dispositif de transport (1), cette surface descendant de façon oblique vers l'arrière et étant déterminée pour passer dessus pour l'au moins un élément de maintien (22) d'un autre dispositif de transport (1) identique pouvant être rentré dans un dispositif de transport (1) se trouvant avant, **caractérisé en ce que**, vue dans la vue horizontale du dispositif de transport (1) et le long de sa direction longitudinale, chaque surface de choc (24) est plongée de façon imagée dans un espace libre (20) et que lors du processus d'empilement des deuxièmes appareils de transport (1), chaque surface de choc (24) du premier dispositif de transport (1) utilise ou nécessite l'espace libre (20) lui étant associé de l'autre dispositif de transport (1).

2. Dispositif de transport selon la revendication 1, **caractérisé en ce que** chaque espace libre (20) prend fin dans la direction verticale suivant plus profondément la délimitation (24a) inférieure de chaque surface de choc (24) et que la largeur de chaque espace libre (20) est plus importante que la largeur de chaque surface de choc (24).

3. Dispositif de transport selon la revendication 1, **caractérisé en ce que** les appuis (15) sont disposés symétriquement à l'axe central (8) vertical du dispositif de transport (1).

4. Dispositif de transport selon la revendication 1, **caractérisé en ce que** la distance intérieure des appuis (15) est plus grande que la largeur mesurée de façon horizontale de l'au moins une surface de choc (24).

5. Dispositif de transport selon la revendication 1, **caractérisé en ce que** les appuis (15) sont disposés soit au niveau des supports longitudinaux (3) soit au niveau de l'étai transversal (6) reliant les supports longitudinaux (3).

6. Dispositif de transport selon la revendication 1, **caractérisé en ce que** chaque appui (15) comporte une section portante (16) et que chaque section portante (16) est disposée de façon opposée et est orientée par rapport à un des deux côtés longitudinaux (7) du dispositif de transport (1).

7. Dispositif de transport selon la revendication 6, **caractérisé en ce que** chaque section portante (16) est équipée d'une partie (17) amortissante et élastique et que le dispositif d'arrêt (11) repose sur les parties (17).

8. Dispositif de transport selon la revendication 1, **caractérisé en ce que** l'au moins une surface de choc (24) est fixée à une traverse (23a) reliant soit le support longitudinal (3) soit les barres (21).

9. Dispositif de transport selon la revendication 1, **caractérisé en ce que** l'au moins une surface de choc (24) est disposée au niveau de l'extrémité arrière (12) de l'au moins un dispositif d'arrêt (11).

10. Dispositif de transport selon la revendication 1, **caractérisé en ce que** chaque dispositif d'arrêt (11) est disposé de façon horizontale.
